# EUROPÄISCHE PATENTANMELDUNG

(11) **EP 4 371 703 A1**
(43) Veröffentlichungstag der Anmeldung: **22.05.2024**
(21) Anmeldenummer: 22208304.0
(22) Anmeldetag: 18.11.2022
(51) Int. Cl.: B24B 27/08, B24B 27/06, B25F 5/02, B23D 47/00

(54) **TRENNSCHLEIFER**

(71) Anmelder: Hilti Aktiengesellschaft, 9494 Schaan (LI)
(72) Erfinder: Specht, Helmut, 87660 Irsee (DE); Reinhardt, Andreas, 6800 Feldkirch (AT); Amman, Christoph, 9486 Schaanwald (LI); Albertini, Luca, 42122 Reggio Emilia (IT); Bertani, Andrea, 42123 Reggio Emilia (RE) (IT)
(74) Vertreter: Hilti Aktiengesellschaft Corporate Intellectual Property

(57) **Zusammenfassung**

Die vorliegende Erfindung betrifft einen Trennschleifer, der zum Einbringen eines Schnittes in einen Untergrund mit einer Trennscheibe verbindbar ist. Die Trennscheibe kann ausgewählt sein aus einer Gruppe von mindestens einem ersten Typ Trennscheibe und einem zweiten Typ Trennscheibe, wobei die Trennscheiben des ersten Typs mit einer Gruppe von ersten Flanschen an dem Trennschleifer befestigbar sind und wobei die Trennscheiben des zweiten Typs mit einer Gruppe von zweiten Flanschen an dem Trennschleifer befestigbar sind. Der Trennschleifer weist Mittel zur Befestigung einer der beiden Gruppen von Flanschen auf. Darüber hinaus kann der Trennschleifer eine Vorrichtung zum Schutz der Flansche aufweisen. Die Erfindung betrifft in einem zweiten Aspekt ein Kit aus einem Trennschleifer und einem Werkzeugschlüssel, wobei der Trennschleifer einen Handgriff umfasst, der einen Hohlraum zur Aufnahme des Werkzeugschlüssels umfasst.

## Beschreibung

Die vorliegende Erfindung betrifft einen Trennschleifer, der zum Einbringen eines Schnittes in einen Untergrund mit einer Trennscheibe verbindbar ist. Die Trennscheibe kann ausgewählt sein aus einer Gruppe von mindestens einem ersten Typ Trennscheibe und einem zweiten Typ Trennscheibe, wobei die Trennscheiben des ersten Typs mit einer Gruppe von ersten Flanschen an dem Trennschleifer befestigbar sind und wobei die Trennscheiben des zweiten Typs mit einer Gruppe von zweiten Flanschen an dem Trennschleifer befestigbar sind. Der Trennschleifer weist Mittel zur Befestigung einer der beiden Gruppen von Flanschen auf. Darüber hinaus kann der Trennschleifer eine Vorrichtung zum Schutz der Flansche aufweisen. Die Erfindung betrifft in einem zweiten Aspekt ein Kit aus einem Trennschleifer und einem Werkzeugschlüssel, wobei der Trennschleifer einen Handgriff umfasst, der einen Hohlraum zur Aufnahme des Werkzeugschlüssels umfasst.

### Hintergrund der Erfindung:

Im Bereich der Werkzeugmaschinen sind sog. Trennschleifer bekannt, die mit scheibenförmigen Werkzeugen verbunden werden können, um Schnitte in einen Untergrund einzubringen. Bei dem Trennschleifer kann es sich um einen netz- oder batteriebetriebenen Trennschleifer oder um einen Benzin-Trennschleifer handeln. Ein Trennschleifer umfasst üblicherweise einen Motor, der seine Drehbewegung über eine Transmissionsvorrichtung auf die Trennscheibe überträgt, so dass die Trennscheibe zu einer schnellen Drehbewegung veranlasst wird. Die Trennscheibe wird häufig an einem Schneidarm des Trennschleifers befestigt, wobei der Schneidarm des Trennschleifers auf einer Vorderseite von einem Hauptkörper des Trennschleifers herausragt. Der Schneidarm kann eine Schneidarm-Abdeckung aufweisen, um die innenliegenden Komponenten des Schneidarms zu schützen.

Die scheibenförmigen Werkzeuge können Trennscheiben mit unterschiedlichen Durchmessern und unterschiedlichen Anwendungszwecken sein. Beispielsweise können abrasive Trennscheiben oder sog. Diamant-Trennscheiben verwendet werden, um unterschiedliche Untergründe zu bearbeiten bzw. zu durchtrennen. Die Trennscheiben werden mit Hilfe von Flanschen an dem Trennschleifer befestigt. Dabei kommen üblicherweise - je nach Art und Beschaffenheit der verwendeten Trennscheibe - unterschiedliche Typen von Befestigungsflanschen zum Einsatz. Ein Flanschset kann beispielsweise zwei Flanschscheiben zu Befestigung einer Trennscheibe umfassen. Die Typen von Flanschscheiben können sich beispielsweise dadurch unterscheiden, dass sie unterschiedliche Durchmesser aufweisen. Der Trennschleifer kann einen Blattschutz aufweisen, um den Nutzer vor Funkenflug oder Spritzwasser zu schützen. Die Begriffe "Blattschutz" und "Schutzhaube" werden im Sinne der Erfindung bevorzugt synonym verwendet.

Häufig wird ein Trennschleifer im Auslieferungszustand mit zwei unterschiedlichen Flanschsets ausgeliefert, d.h. mit einem ersten Flanschset mit zwei Flanschen mit einem größeren Außendurchmesser zur Verwendung mit abrasiven Trennscheiben und mit einem zweiten Flanschset mit zwei Flanschen mit einem kleineren Außendurchmesser zur Verwendung mit Diamant-Trennscheiben. In vielen Fällen ist jeweils ein Flanschset an dem Trennschleifer vormontiert, während das andere Flanschset lose in der Verpackung mitgeliefert wird. Die Lagerung des zweiten Flanschsets ist in der Praxis häufig mit dem Problem verbunden, dass kein optimaler Aufbewahrungsort dafür gefunden werden kann. Dadurch gehen die aktuell nicht benötigten Flansche bzw. Flanschsets häufig schnell verloren oder sie stehen bei Bedarf nicht dort zur Verfügung, wo sie gebraucht werden.

Es besteht daher ein Bedürfnis nach einer technischen Lösung, um dem oben beschriebenen Mißstand zu begegnen. Die Aufgabe, die der vorliegenden Erfindung zugrunde liegt, besteht demnach darin, die vorstehend beschriebenen Mängel und Nachteile des Standes der Technik zu überwinden und einen technischen Lösung dafür bereitzustellen, zu verhindern, dass nicht benötigte Befestigungsflansche verloren gehen, bzw. dafür Sorge zu tragen, dass jeweils das benötigte und "richtige" Befestigungsflanschset am Einsatzort des Trennschleifers parat ist, um die gewünschte Trennscheibe an dem Trennschleifer zu befestigen.

Der Ort, an dem die Trennscheibe an dem Trennschleifer befestigt werden kann, wird im Sinne der Erfindung bevorzugt als "Befestigungsumgebung" bezeichnet. Häufig ist die Befestigungsumgebung an dem Trennschleifer zur Befestigung der Trennscheibe und der Befestigungsflansche für einen bestimmten Flanschtyp optimiert ausgebildet. Die Befestigungsumgebung des Trennschleifers kann beispielsweise von dem vorderen Bereich des Schneidarms des Trennschleifers gebildet werden. Ebenfalls im Bereich der Befestigungsumgebung des Trennschleifers können der Blattschutz und/oder die Schneidarm-Abdeckung angeordnet vorliegen. Beispielsweise kann die Befestigungsumgebung des Trennschleifers für die Verwendung eines Flanschsets mit Flanschen eines kleineren Außendurchmessers optimiert sein, um bei der Verwendung von Diamant-Trennscheiben eine maximale Schnitttiefe zu ermöglichen. Es hat sich gezeigt, dass insbesondere bei dem Flanschset mit dem größeren Außendurchmesser zur Befestigung der Trennscheibe an dem Trennschleifer die Flansche zumindest teilweise gegenüber anderen Bauteilen und Komponenten des Trennschleifers vorstehen können. Mit anderen Worten ragen diese Flansche über die allgemeinen Abmessungen des Trennschleifers heraus. Die rotierenden Flansche können dadurch leicht mit dem zu bearbeitenden Untergrund in Kontakt kommen und dadurch verschleißen oder beschädigt werden. Darüber hinaus hat sich gezeigt, dass die Flansche unerwünschterweise durch den Kontakt mit dem Untergrund geschliffen werden können, so dass sie scharfe Kanten erhalten, die ein Verletzungsrisiko für den Nutzer des Trennschleifers darstellen können.

Eine weitere Aufgabe, die der Erfindung zugrunde liegt, besteht somit darin, einen Trennschleifer mit möglichst langlebigen Flanschen bereitzustellen, bei dem selbst Flansche mit einem vergleichsweise großen Außendurchmesser wirksam gegenüber Verschleiß und Abnutzung geschützt sind. Darüber hinaus würde es die Fachwelt begrüßen, wenn der Nutzer des Trennschleifers optimal vor Verletzungen geschützt werden könnte.

Trennschleifer werden häufig mit einem Werkzeugschlüssel ausgeliefert, um die Trennscheiben an dem Trennschleifer - vorzugsweise im Bereich der Befestigungsumgebung - zu befestigen. Praxistests haben ergeben, dass die Lagerung und das Mitführen des Werkzeugschlüssels zum richtigen Zeitpunkt, insbesondere dann, wenn der Werkzeugschlüssel benötigt wird, eine Herausforderung darstellen kann. Eine weitere Aufgabe, die der Erfindung zugrunde liegt, besteht somit darin, eine technische Lösung für die Lagerung bzw. die Bereitstellung des Werkzeugschlüssels zum "richtigen" Zeitpunkt, nämlich dann, wenn er benötigt wird, anzugeben.

Die verschiedenen Aufgaben, die der vorliegenden Erfindung zugrunde liegen, können so zusammengefasst werden, dass ein Trennschleifer mit komfortabler Handhabung bereitgestellt werden soll, bei dem die unterschiedlichen Zubehörteile, wie zusätzliche Befestigungsflansche oder Werkzeugschlüssen, einerseits so gelagert werden sollen, dass sie nicht verloren gehen, andererseits jeweils zum "richtigen" Einsatzzeitpunkt am Gerät parat sein sollen. Darüber hinaus sollen der Trennschleifer und seine Komponenten, insbesondere die Flansche zur Befestigung der Trennscheiben, wirksam vor Abnutzung und Verschleiß geschützt werden. Ferner würde es die Fachwelt begrüßen, wenn auch der Nutzer durch die Erfindung vor etwaigen scharfkantigen Befestigungsflanschen geschützt werden könnte.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Trennschleifer vorgesehen, der zum Einbringen eines Schnittes in einen Untergrund mit einer Trennscheibe verbindbar ist. Die Trennscheibe ist ausgewählt aus einer Gruppe von mindestens einem ersten Typ Trennscheibe und einem zweiten Typ Trennscheibe, wobei die Trennscheiben des ersten Typs mit einer Gruppe von ersten Flanschen an dem Trennschleifer befestigbar sind und wobei die Trennscheiben des zweiten Typs mit einer Gruppe von zweiten Flanschen an dem Trennschleifer befestigbar sind. Der Trennschleifer weist Mittel zur Befestigung einer der beiden Gruppen von Flanschen auf.

Mit der Erfindung kann vorteilhafterweise eine technische Lösung dafür bereitgestellt werden, dass das jeweils nicht benötigte Flanschset verliersicher gelagert werden kann. Darüber hinaus kann mit der Erfindung sichergestellt werden, dass das zunächst nicht benötigte Flanschset, d.h. die Gruppe von nicht benötigten Flanschen, zum richtigen Einsatzzeitpunkt am Einsatzort, nämlich beim Trennschleifer, ist, um Trennscheiben mit den entsprechenden Befestigungsflanschen an dem Trennschleifer zu befestigen. Insbesondere kann mit der Erfindung bei zwei vorhandenen unterschiedlichen Befestigungsflanschsets sichergestellt werden, dass das aktuell nicht verwendete Befestigungsflanschset an dem Trennschleifer befestigt werden kann, vorteilhafterweise an einem Ort, wo es den Betrieb des Trennschleifers nicht stört oder beeinträchtigt. Das zweite Befestigungsflanschset kann somit vorteilhafterweise immer mit dem Trennschleifer mitgeführt werden und ist parat und verfügbar, wenn es benötigt wird, um eine Trennscheibe an dem Schneidarm des Trennschleifers zu befestigen. Insbesondere kann ein unerwünschter und ärgerlicher Verlust des nicht benötigten Befestigungsflanschen mit der Erfindung wirksam vermieden werden.

Es ist im Sinne der Erfindung bevorzugt, dass abrasive Trennscheiben als «Trennscheiben des ersten Typs» bezeichnet werden, während Diamant-Trennscheiben als «Trennscheiben des zweiten Typs» bezeichnet werden. Vorzugsweise können die Trennscheiben des ersten Typs mit Befestigungsflanschen mit einem größeren Außendurchmesser an dem Trennschleifer befestigt werden, während zur Befestigung der Trennscheiben des zweiten Typs auch Befestigungsflansche mit einem kleineren Außendurchmesser verwendet werden können. Mit anderen Worten können abrasive Trennscheiben mit Befestigungsflanschen mit einem größeren Außendurchmesser an dem Trennschleifer befestigt werden, während zur Befestigung von Diamant-Trennscheiben auch Befestigungsflansche mit einem kleineren Außendurchmesser verwendet werden können. Es ist im Sinne der Erfindung bevorzugt, Flansche mit einem größerem Außendurchmesser für abrasive Trennscheiben und Flansche mit einem kleinerem Außendurchmesser für Diamant-Trennscheiben zu verwenden. Dabei ermöglicht insbesondere die Nutzung von Befestigungsflanschen mit unterschiedlichen Durchmessern das Erreichen einer erhöhten Schnitt-Tiefe beim Schneiden mit einem Trennschleifer. Dieser Vorteil der Erfindung kann insbesondere dann erreicht werden, wenn die Geometrie der Bauteile des Trennschleifers es zulässt, dass diese besonders großen Schnitt-Tiefen erreicht werden. Die Befestigungsflansche mit einem größeren Außendurchmesser werden im Sinne der Erfindung bevorzugt als «Gruppe von ersten Flanschen» bezeichnet, während die Befestigungsflansche mit einem kleineren Außendurchmesser im Sinne der Erfindung bevorzugt als «Gruppe von zweiten Flanschen» bezeichnet werden. Somit wird die Gruppe von ersten Flanschen vorzugsweise zur Befestigung der abrasiven Trennscheiben verwendet, während die Gruppe von zweiten Flanschen vorzugsweise zur Befestigung der Diamant-Trennscheiben verwendet wird. Für die Formulierung «Gruppe von Flanschen» können im Sinne der Erfindung bevorzugt auch die alternativen Formulierungen «Flanschset» oder «Befestigungsflanschset» verwendet werden. Es ist im Sinne der Erfindung bevorzugt, dass die Trennscheiben des ersten Typs einen größeren Außendurchmesser als die die Trennscheiben des zweiten Typs aufweisen.

Erfindungsgemäß ist vorgesehen, dass der Trennschleifer Mittel zur Befestigung einer der beiden Gruppen von Flanschen aufweist. Die Gruppe von Flanschen, die mit den Mitteln zur Befestigung an dem Trennschleifer befestigt wird, ist vorzugsweise diejenige Gruppe von Flanschen, die gerade nicht benötigt wird, um die verwendete Trennscheibe an dem Trennschleifer zu befestigen. Mit anderen Worten sind die Mittel zur Befestigung dazu eingerichtet, das aktuell nicht benötigte Flanschset an dem Trennschleifer zu befestigen. Das verwendete und benötigte Flanschset wird währenddessen dazu verwendet, die aktuell an dem Trennschleifer verwendete Trennscheibe an dem Trennschleifer zu befestigen, damit mit der verwendeten und benötigten Trennscheibe gearbeitet werden kann, um einen Untergrund zu zerschneiden oder Schnitte darin einzubringen. Es ist im Sinne der Erfindung bevorzugt, dass die «Mittel zur Befestigung» im Sinne der Erfindung bevorzugt auch als «Befestigungsmittel» bezeichnet werden können. Vorzugsweise kann die aktuell verwendete und benötigte Trennscheibe mit einem der beiden Flanschsets im Bereich der Befestigungsumgebung, beispielsweise im vorderen Bereich des Schneidarms, befestigt werden, damit mit dieser Trennscheibe gearbeitet werden kann. Das andere Flanschset kann derweil mit den Befestigungsmitteln an einem anderen Ort an dem Trennschleifer befestigt werden, vorzugsweise in einiger Entfernung von der Befestigungsumgebung, um die Arbeit mit dem Trennschleifer weder zu stören, noch zu beeinträchtigen. Es ist im Sinne der Erfindung bevorzugt, dass die Mittel zur Befestigung der Flansche an einem beliebigen, dafür geeigneten Ort an dem Trennschleifer vorgesehen sein können. «Geeignet» wird ein Ort an dem Trennschleifer vorzugsweise dadurch für die Anbringung des nicht benötigten Befestigungsflanschsets, dass eine Anbringung an diesem Ort keine Störung oder eine Beeinträchtigung der Arbeit mit dem Trennschleifer darstellt.

Es ist im Sinne der Erfindung bevorzugt, dass die Mittel zur Befestigung der Flansche einen Zylinder aufweisen, der einen inneren Hohlraum mit Gewindebohrung und auf seiner Außenfläche Kontaktflächen zum Kontaktieren der Flansche aufweist. Die Befestigungsmittel sind vorzugsweise analog zu der Spindelgeometrie ausgebildet. Das bedeutet im Sinne der Erfindung bevorzugt, dass die Befestigungsmittel so ausgebildet sind, dass das nicht benötigte Befestigungsflanschset so an den Befestigungsmitteln befestigt werden kann, wie an dem Schneidarm des Trennschleifers. Allerdings erfolgt die Befestigung des nicht benötigten Befestigungsflanschsets an den Befestigungsmittels vorzugsweise zum Zwecke der Lagerung, um einen Verlust des Befestigungsflansches zu verhindern und um das nicht benötigte Befestigungsflanschset sicher aufzubewahren, während die Befestigung des benötigten und verwendeten Befestigungsflansches an dem Schneidarm bzw. an der Spindel des Trennschleifers vorzugsweise dergestalt und mit dem Zweck erfolgt, dass eine Trennscheibe mit dem benötigten Befestigungsflanschset an dem Schneidarm bzw. an der Spindel des Trennschleifers befestigt wird, um damit zu arbeiten. Die Befestigungsmittel können an einem beliebigen geeigneten Ort an dem Trennschleifer angeordnet vorliegen. Es ist im Sinne der Erfindung bevorzugt, dass zur Befestigung des nicht benötigten Befestigungsflanschsets an dem Befestigungsmittel eine Befestigungsschraube verwendet wird. Die Befestigungsschraube kann in den inneren Hohlraum des Befestigungsmittels eingeführt werden, wobei der innere Hohlraum eine Gewindebohrung aufweisen kann, die dazu eingerichtet ist, mit dem Gewinde der Befestigungsschraube zusammenzuwirken. Vorzugsweise kann das Befestigungsmittel von einem Hohlzylinder gebildet werden, dessen hohler Innenraum im Sinne der Erfindung bevorzugt als «innerer Hohlraum» bezeichnet wird. Dieser hohle Innenraum des vorzugsweise als Hohlzylinder ausgebildeten Befestigungsmittels kann eine Gewindebohrung für die Befestigungsschraube aufweisen. An seiner Außenseite kann das als Hohlzylinder ausgebildete Befestigungsmittel Kontaktflächen zum Kontaktieren der Flansche aufweisen.

In einer alternativen Ausgestaltung des Befestigungsmittels kann das Mittel zur Befestigung der Flansche als Schnapp-Verbindungsmittel ausgebildet sein. Es ist im Sinne der Erfindung bevorzugt, dass das Schnapp-Verbindungsmittel mit einem Kopfabschnitt an dem Trennschleifer befestigbar ist und auf der dem Kopfabschnitt gegenüberliegenden Seite Spreizarme mit je einer distalen Verdickung zur Aufnahme der Flansche aufweist. Der Kopfabschnitt des Schnapp-Verbindungsmittel kann beispielsweise an einem Gehäuse des Trennschleifers befestigt werden, beispielsweise durch eine Klebung oder durch eine Schraubverbindung. Selbstverständlich ist auch jede andere Befestigung denkbar, die hinreichend stabil ist, um das Schnapp-Verbindungsmittel sicher und stabil an dem Trennschleifer oder an seinem Gehäuse zu befestigen. Um die Flansche des nicht benötigten Befestigungsflanschsets an dem als Schnapp-Verbindungsmittel ausgebildeten Befestigungsmittel zu befestigen, können die Flansche über das distale Ende des Befestigungsmittels geschoben werden, wodurch die Spreizarme des Befestigungsmittels zusammengedrückt werden. Die Spreizarme des Befestigungsmittels können von einer Öffnung der Flansche aufgenommen werden, wobei die Flansche durch die distalen Verdickungen auf den Spreizarmen gehalten werden, so dass sie auf den Spreizarmen befestigt vorliegen.

Es ist im Sinne der Erfindung bevorzugt, dass der Trennschleifer eine Vorrichtung zum Schutz der Flansche aufweist. Die Vorrichtung zum Schutz der Flansche kann im Sinne der Erfindung bevorzugt auch als Schutzvorrichtung bezeichnet werden. Mit der Schutzvorrichtung können die Flansche des aktuell verwendeten Befestigungsflanschsets wirksam vor Abnutzung und Verschleiß geschützt werden. Vor allem, wenn Flansche aufgrund ihres Außendurchmessers über andere Komponenten des Trennschleifers herausragen, können die Flansche mit Hilfe der Schutzvorrichtung geschützt werden. Es hat sich gezeigt, dass mit der Schutzvorrichtung nicht nur ein Verschleißschutz für die Befestigungsflansche erreicht werden kann. Vielmehr ermöglicht die Schutzvorrichtung auch, dass bei entsprechender Anwendung und Positionierung mit den Trennscheiben bei der Arbeit mit dem vorgeschlagenen Trennschleifer vorteilhafterweise auch eine maximale Schnitttiefe erreicht werden kann. Die Schutzvorrichtung stellt vorzugsweise ein zusätzliches Bauteil des Trennschleifers dar, das an einem Gehäuse des Trennschleifers drehbar befestigt werden kann. Es ist im Sinne der Erfindung ganz besonders bevorzugt, dass die Schutzvorrichtung um einen Drehwinkel alpha drehbar ausgebildet sein kann, wobei der Drehwinkel alpha in einem Bereich von 0 bis 210 Grad liegen kann, bevorzugt in einem Bereich von 0 bis 190 Grad und besonders bevorzugt in einem Bereich von 0 bis 180 Grad. In einer besonders bevorzugten Ausgestaltung der Erfindung kann die Schutzvorrichtung um 180 Grad gedreht werden. Darüber hinaus kann die Schutzvorrichtung in dieser Ausgestaltung definierte Anschraubbohrungen und/oder Anschraubpositionen aufweisen. Vorteilhafterweise können die aktuell an dem Trennschleifer verwendeten Befestigungsflansche durch die Drehfunktion der Schutzvorrichtung sicher vor Verschleiß und/oder Abnutzung geschützt werden, ohne dass eine maximale Schnitttiefe des Trennschleifers verringert wird. Das zusätzliche Bauteil kann an einem Gehäuseteil des Trennschleifers angeordnet werden, beispielsweis an dem Blattschutz des Trennschleifers. Es ist im Sinne der Erfindung ganz besonders bevorzugt, dass die Vorrichtung zum Schutz der Flansche zwischen einer Schutzhaube der Trennschleifers und einem Schneidarm des Trennschleifers verliersicher angebracht werden kann.

Die Schutzvorrichtung stellt vorzugsweise ein zusätzliches Bauteil des Trennschleifers dar, das bevorzugt ringförmig ausgebildet sein kann. Vorzugsweise kann die Schutzvorrichtung im Sinne der Erfindung auch als Schutzring bezeichnet werden. Es ist im Sinne der Erfindung bevorzugt, dass die Vorrichtung zum Schutz der Flansche von einem geschlossenen Ring oder von einem Winkel- oder Teilbereich eines Rings gebildet wird. Insbesondere dann, wenn die Schutzvorrichtung von einem geschlossenen Ring gebildet wird, kann die Schutzvorrichtung durch die geschlossene Bauform und die bevorzugte Anordnung zwischen Blattschutz und Schneidarm verliersicher an dem Trennschleifers gelagert werden.

Die Schutzvorrichtung kann mit Befestigungsschrauben an dem Blattschutz des Trennschleifers befestigt werden und sich zusammen mit dem Blattschutz drehen. Es ist im Sinne der Erfindung bevorzugt, dass die Vorrichtung zum Schutz der Flansche zwei Öffnungen aufweist, wobei die Öffnungen vorzugsweise auf gegenüberliegenden Seiten der Schutzvorrichtung angeordnet vorliegen und wobei die Schutzvorrichtung mit Hilfe der Öffnungen an der Schutzhaube des Trennschleifers befestigt werden können. Wenn beispielsweise der Blattschutz um einen Winkelbereich von 60 Grad nach hinten bewegt wird, ist es im Sinne der Erfindung bevorzugt, dass sich auch die Schutzvorrichtung um diesen Winkel nach hinten bewegt. Durch die Befestigung der Schutzvorrichtung an der Schutzhaube des Trennschleifers kann vorteilhafterweise erreicht werden, dass sich die Vorrichtung zum Schutz der Flansche bei einer Bewegung, d.h. Drehung, der Schutzhaube mitdrehen kann. Das bedeutet im Sinne der Erfindung bevorzugt, dass die Schutzvorrichtung und die Schutzhaube gemeinsam miteinander gedreht werden können.

Mit der Schutzvorrichtung können die Befestigungsflansche des Trennschleifers zumindest teilweise abgedeckt werden, so dass die Befestigungsflansche vor einem unerwünschten Kontakt mit dem Untergrund geschützt werden. Es hat sich gezeigt, dass vor allem die Befestigungsflansche mit einem größeren Durchmesser mit der Schutzvorrichtung besonders gut vor einem solchen Verschleiß geschützt werden können, da insbesondere die Befestigungsflansche mit einem größeren Durchmesser über einzelne Komponenten des Trennschleifers herausragen und so in Kontakt mit dem Untergrund geraten können. Die Drehbarkeit der Schutzvorrichtung ermöglicht es vorteilhafterweise, dass die Schutzvorrichtung beim Schneiden mit dem Trennschleifer nicht im Wege ist. Dadurch kann der vorgeschlagene Trennschleifer auch bei Vorhandensein die erhöhte Schnitt-Tiefe erreichen, die durch die Verwendung von Befestigungsflanschen mit unterschiedlichen Durchmessern ermöglicht wird. Mit anderen Worten kann mit der Schutzvorrichtung in einer ersten Position ein Befestigungsflansch des Trennschleifers zumindest teilweise umgeben und dadurch vor einem unerwünschten Kontakt mit dem zu bearbeitenden Untergrund geschützt werden. Darüber hinaus kann die Schutzvorrichtung um einen Winkel alpha gedreht und in eine zweite Position gebracht werden, in der vorteilhafterweise keine Beeinträchtigung der maximalen Schnitt-Tiefe auftritt. Die erste Position ist vor allem dafür geeignet, Befestigungsflansche mit größeren Durchmessern zu schützen, während in der zweiten Position vor allem Befestigungsflansche mit kleineren Durchmessern geschützt werden können. Der Drehwinkel alpha kann vorzugsweise im Bereich von oder bei 180 Grad liegen.

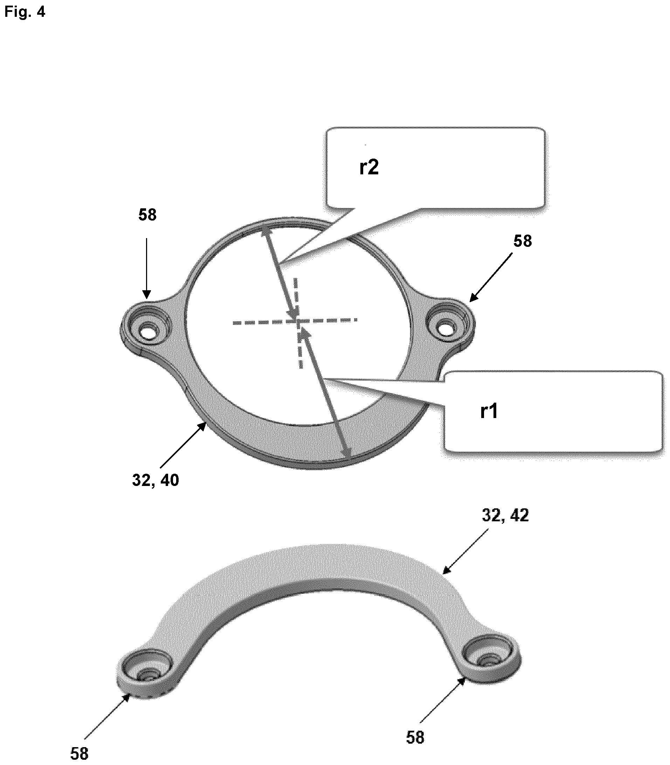

Die Schutzvorrichtung kann einen ersten Abschnitt und einen zweiten Abschnitt umfassen, wobei beide Abschnitte vorzugsweise einen Winkelbereich von ca. 180 Grad der bevorzugt ringförmigen Schutzvorrichtung ausmachen. Vorzugsweise können die Abschnitte in dieser Ausgestaltung der Erfindung auch als «Hälften» bezeichnet werden. Der Umfangsbereich der Schutzvorrichtung kann im ersten Abschnitt von einen dünnen Stück Metall gebildet werden, so dass ein Abstand zwischen einem Mittel- oder Schwerpunkt der Schutzvorrichtung und einer äußeren Umfangsfläche der Schutzvorrichtung im ersten Abschnitt einem Radius r2 des kleineren Befestigungsflansches entspricht. Der Umfangsbereich der Schutzvorrichtung kann im zweiten Abschnitt im Vergleich zum ersten Abschnitt verstärkt ausgebildet sein, d.h. bevorzugt von einen dickeren Stück Metall, so dass ein Abstand zwischen dem Mittel- oder Schwerpunkt der Schutzvorrichtung und einer äußeren Umfangsfläche der Schutzvorrichtung im zweiten Abschnitt einem Radius r1 des größeren Befestigungsflansches entspricht, wobei r2 < r1. Diese Radien werden in Figur 4 oben dargestellt.

In einem zweiten Aspekt betrifft die Erfindung ein Kit umfassend einen Trennschleifer und einen Werkzeugschlüssel. Die für den Trennschleifer eingeführten Begriffe, Definitionen und technischen Vorteile gelten vorzugsweise für das Kit analog. Der Trennschleifer umfasst einen Handgriff, wobei der Handgriff einen Hohlraum zur Aufnahme des Werkzeugschlüssels aufweist. Mit dem einen Hohlraum aufweisenden Handgriff des Trennschleifers kann eine Aufbewahrungsmöglichkeit für den Werkzeugschlüssel bereitgestellt werden, ohne dass dafür zusätzliche Bauteile oder Komponenten an dem Trennschleifer vorgesehen sein müssen. Der Werkzeugschlüssel ist dadurch außen am Gerät und damit leicht zugänglich für den Nutzer des Trennschleifers angebracht. Darüber hinaus befindet sich der Werkzeugschlüssel durch seine Anbringung im Bereich des Handgriffs des Trennschleifers im Blickfeld des Nutzers. Bei dem Trennschleifer kann es sich vorzugsweise um einen vorgeschlagenen Trennschleifer handeln, der mit mindestens zwei unterschiedlichen Gruppen von Trennscheiben betrieben werden kann. Es kann aber im Sinne der Erfindung auch bevorzugt sein, dass es sich um einen Trennschleifer mit anderen Eigenschaften handelt.

Bei dem Handgriff kann es sich vorzugsweise um einen umlaufenden Handgriff im mittleren Bereich des Trennschleifers handeln. Es ist im Sinne der Erfindung bevorzugt, dass der Handgriff einen Abschnitt aufweist, der im Wesentlichen parallel zu einer Gehäusewand des Trennschleifers verläuft, wobei sich der Hohlraum zur Aufnahme des Werkzeugschlüssels zumindest teilweise in einem Innenraum dieses im Wesentlichen parallel verlaufenden Abschnitts erstreckt. Dadurch kann der Werkzeugschlüssel von oben in den Hohlraum eingeführt oder eingesteckt werden. Außerdem bleiben durch diese Anordnung des Hohlraums die Griffflächen des Handgriffs für den Nutzer des Trennschleifers weiter im Wesentlichen uneingeschränkt nutzbar.

Der Hohlraum kann an seiner inneren Umfangswand Rippen zur Fixierung des Werkzeugschlüssels aufweisen, so dass der Werkzeugschlüssel reibungsbedingt sicher in dem Hohlraum gehalten wird. Insbesondere stellen die bevorzugt integriert ausgebildeten Rippen sicher, dass der Werkzeugschlüssel entgegen der Schwerkraft in dem Hohlraum gehalten wird. Der Hohlraum kann insbesondere so in dem Handgriff integriert vorliegen, dass eine Öffnung des Hohlraums das Einführen des Werkzeugschlüssels von einer Raumrichtung «oben» ermöglicht. Wenn die Werkzeugmaschine auf einem Untergrund, wie dem Erdboden, steht, hilft die Schwerkraft beim Hineingleiten des Werkzeugschlüssels in den Hohlraum des Handgriffs des vorgeschlagenen Trennschleifers. Es ist im Sinne der Erfindung bevorzugt, dass der Handgriff Klemm-Mittel zur weiteren Fixierung des Werkzeugschlüssels aufweist. Diese Klemm-Mittel können eine Schnapp- oder Klemmverbindung des Werkzeugschlüssels mit dem Trennschleifer ermöglichen. Dadurch liegt der Werkzeugschlüssel stets mit einer bestimmten, festgelegten Ausrichtung bzw. Orientierung in dem Hohlraum des Handgriffs des Trennschleifers angeordnet vor, so dass der Nutzer stets weiß, wie der Werkzeugschlüssel in seiner Hand zu liegen kommen wird. Darüber hinaus kann der Werkzeugschlüssel durch Vorsehung der zusätzlichen Klemm-Mittel noch besser gegen Verlust oder ein unerwünschtes selbständiges Lösen geschützt werden.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert.

Es zeigen:
- Fig. 1: Ansicht von bevorzugten Ausgestaltungen von Trennschleifern mit unterschiedlichen Trennscheiben.
- Fig. 2: Ansicht von bevorzugten Ausgestaltungen von Befestigungsflanschsets mit Flanschen mit unterschiedlichen Außendurchmessern
- Fig. 3: Ansicht von bevorzugten Ausgestaltungen von Befestigungsmitteln
- Fig. 4: Ansicht von bevorzugten Ausgestaltungen von Schutzvorrichtungen
- Fig. 5: Ansicht einer bevorzugten Ausgestaltung der Schutzvorrichtung im montierten Zustand
- Fig. 6: Ansicht einer bevorzugten Ausgestaltung eines Handgriffs mit Hohlraum zur Aufnahme eines Werkzeugschlüssels
- Fig. 7: Detailansicht einer bevorzugten Ausgestaltung einer Öffnung eines Hohlraums zur Aufnahme eines Werkzeugschlüssels mit Befestigungsrippen
- Fig. 8: Detailansicht einer bevorzugten Ausgestaltung eines Klemm-Mittels zur Befestigung des Werkzeugschlüssels

### Ausführungsbeispiele und Figurenbeschreibung:

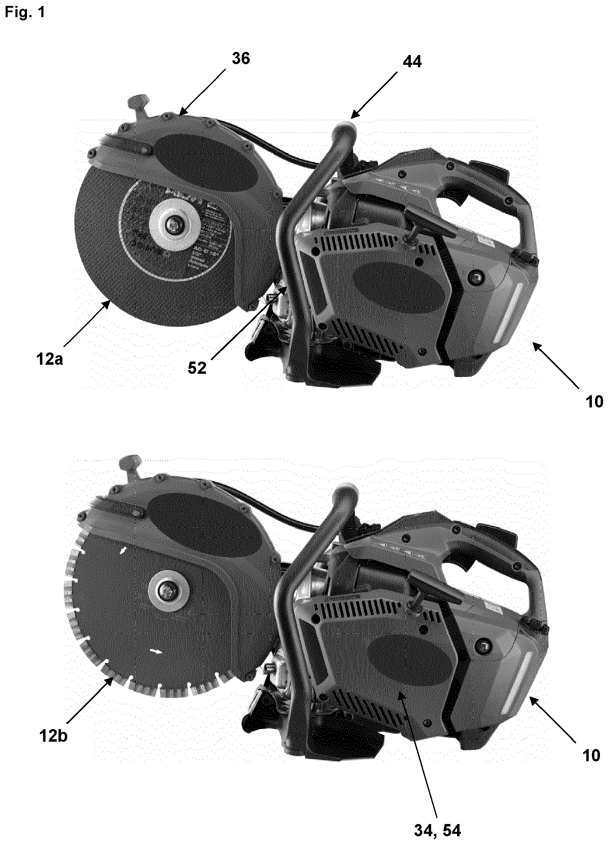

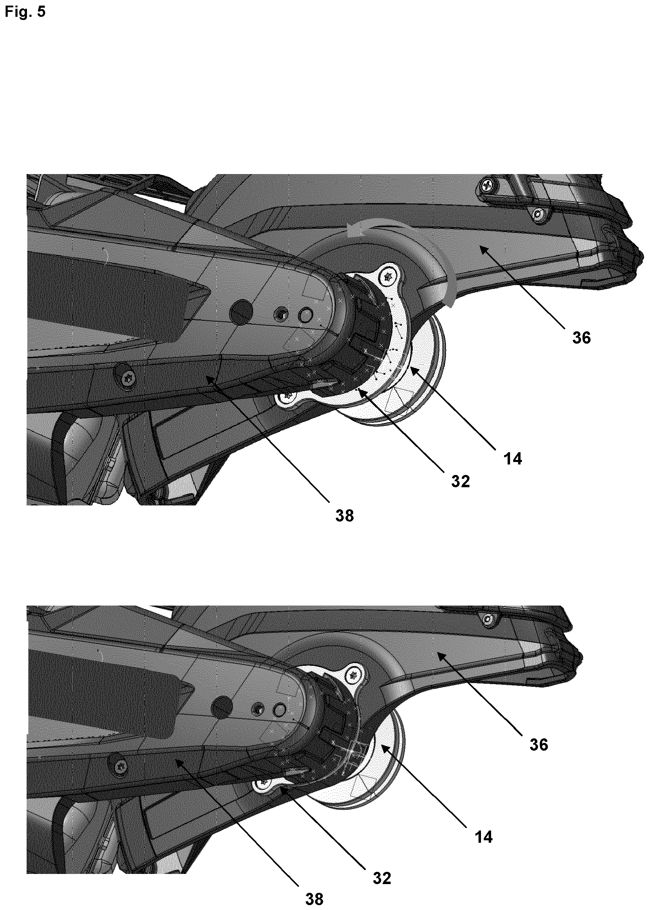

Figur 1 zeigt bevorzugte Ausgestaltungen von Trennschleifern 10 mit unterschiedlichen Trennscheiben 12. Der obere Trennschleifer 10 ist mit einer abrasiven Trennscheibe 12a verbunden, wobei diese abrasiven Trennscheiben 12a als «Trennscheiben des ersten Typs» bezeichnet werden können. Der untere Trennschleifer 10 liegt mit einer Diamant-Trennscheibe 12b verbunden vor, wobei diese Diamant-Trennscheiben 12b als «Trennscheiben des zweiten Typs» bezeichnet werden können. Die Trennschleifer 10, die in Figur 1 abgebildet sind, weisen jeweils einen Handgriff 44 und einen Blattschutz 36 auf. Der Blattschutz 36 kann vorzugsweise auch als Schutzhaube bezeichnet werden. Auf der Rückseite des in Figur 1 dargestellten Trennschleifers 10 liegt der Schneidarm 38 angeordnet vor, an dem die Trennscheibe 12 befestigt werden kann. Der Schneidarm 38 ist in Figur 1 nicht dargestellt, allerdings ist der Schneidarm 38 in Figur 5 zu sehen. Der Handgriff 44 weist einen Abschnitt 52 auf, der im Wesentlichen parallel zu einer Wand 54 des Gehäuses 34 des Trennschleifers 10 verläuft.

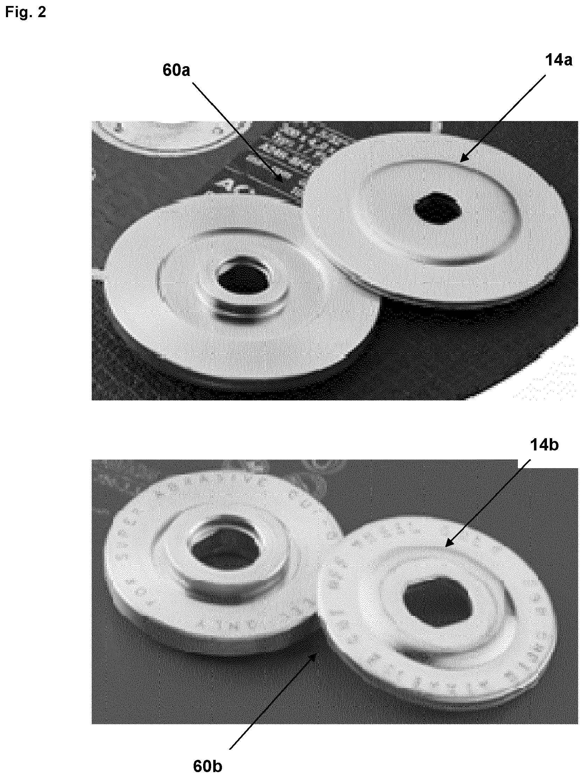

Figur 2 zeigt bevorzugte Ausgestaltungen von Befestigungsflanschsets 60 mit Flanschen 14 mit unterschiedlichen Außendurchmessern. In der oberen Hälfte der Figur 2 ist beispielsweise ein Flanschset 60a mit Befestigungsflanschen 14a des ersten Typs abgebildet. Die Befestigungsflansche 14a des ersten Typs können vorzugsweise dazu verwendet werden, Trennscheiben 12a des ersten Typs, zum Beispiel abrasive Trennscheiben, an dem Trennschleifer 10 zu befestigen. Selbstverständlich sind auch anderen Befestigungsarten und Arten von Trennscheiben 12 denkbar. In der unteren Hälfte der Figur 2 ist beispielsweise ein Flanschset 60b mit Befestigungsflanschen 14b des zweiten Typs abgebildet. Die Befestigungsflansche 14b des zweiten Typs können vorzugsweise dazu verwendet werden, Trennscheiben 12b des zweiten Typs, zum Beispiel Diamant-Trennscheiben, an dem Trennschleifer 10 zu befestigen. Die Befestigungsflansche 14a des ersten Typs weisen einen größeren Außendurchmesser als die Befestigungsflansche 14b des zweiten Typs auf. Beispielsweise kann ein Außendurchmesser eines Befestigungsflansches 14a des ersten Typs bei 78 mm liegen, während ein Außendurchmesser eines Befestigungsflansches 14b des zweiten Typs bei 60 mm liegt. Es ist im Sinne der Erfindung bevorzugt, dass ein Befestigungsflanschset 60 von zwei Befestigungsflanschen 14 gebildet wird, die jeweils einen gleichen Außendurchmesser aufweisen.

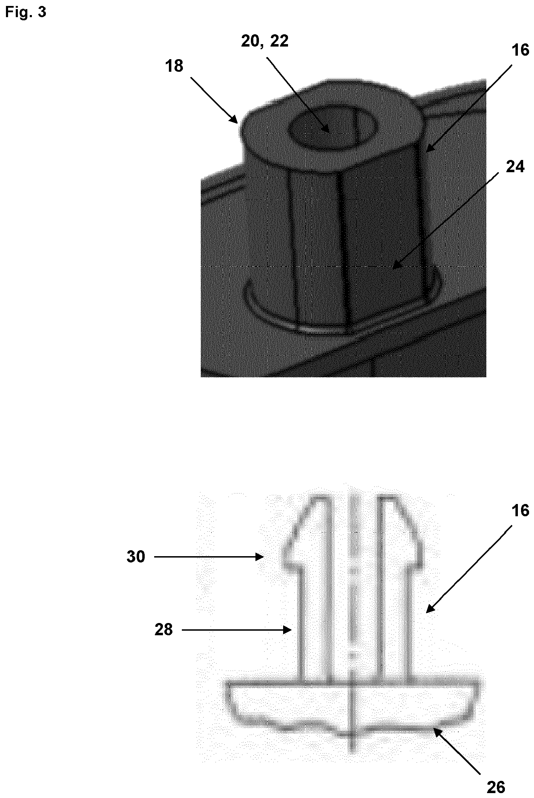

Figur 3 zeigt bevorzugte Ausgestaltungen von Befestigungsmitteln 16. Die Befestigungsmittel 16 sind vorzugsweise dazu eingerichtet, ein jeweils nicht benutztes Befestigungsflanschset 60 an dem Trennschleifer 10 zu befestigen, wobei der Anbringungsort des aktuell nicht benötigten Befestigungsflanschsets 60 vorzugsweise von dem Befestigungsort der Trennscheibe 12 des Trennschleifers 10 im vorderen Bereich des Schneidarms 38 entfernt ist. In der oberen Hälfte der Figur 3 wird ein Befestigungsmittel 16 gezeigt, das von einem Pin 18 oder einem Hohlzylinder 18 gebildet werden kann. Das Befestigungsmittel 16 kann einen inneren Hohlraum 22 mit einer Gewindebohrung 22 aufweisen. Die Befestigungsflansche 14 können mit einer Befestigungsschraube (nicht dargestellt) an dem Befestigungsmittel 16 befestigt werden. Dabei können die Flansche 14 in Kontakt mit Kontaktflächen 24 an den Außenseiten des Befestigungsmittels 16 kommen. Die Kontaktflächen 24 können im Sinne der Erfindung bevorzugt auch als Schlüsselflächen bezeichnet werden.

In der unteren Hälfte der Figur 3 ist ein Schnapp-Befestigungsmittel 16 dargestellt. Das Schnapp-Befestigungsmittel 16 weist einen Kopfabschnitt 26 auf, mit dem das Befestigungsmittel an einem Gehäuse 34 (in Figur 3 nicht dargestellt) des Trennschleifers 10 angebracht werden kann. Das als Schnapp-Befestigungsmittel ausgebildete Befestigungsmittel 16 kann Spreizarme 28 aufweisen, die an ihrem distalen Ende 30 Verdickungen 31 aufweisen. Die Verdickungen 31 verhindern, dass die Flansche 14 - wenn sie auf die Spreizarme 28 geschoben wurden - wieder von den Spreizarmen 28 abrutschen. Die distalen Verdickungen 31 und der Kopfabschnitt 26 des Befestigungsmittels 16 liegen vorzugsweise an gegenüberliegenden Enden des Befestigungsmittels 16 vor.

Figur 4 zeigt bevorzugte Ausgestaltungen von Schutzvorrichtungen 32, mit denen die Befestigungsflansche 34 vor Abnutzung und Verschleiß geschützt werden können. Die Schutzvorrichtung 32 kann ringförmig 40 ausgebildet sein oder von einem Ringabschnitt 42 gebildet werden. Die Schutzvorrichtung 32 kann an dem Blattschutz 36 des Trennschleifers 10 befestigt werden und drehbar ausgebildet sein. Zur Befestigung an der Schutzhaube 36 kann die Schutzvorrichtung 32 Öffnungen 58 aufweisen, durch die Befestigungsschrauben (nicht dargestellt) geführt werden können.

Im oberen Bereich von Figur 4 ist dargestellt, wie Abmessungen der Schutzvorrichtung 32 den Radien r1 und r2 der Befestigungsflansche 14 entsprechend können. Dabei kann die Schutzvorrichtung 32 so gedreht werden, dass in einer ersten Position der Schutzvorrichtung 32 vor allem Befestigungsflansche 12a mit größeren Durchmessern geschützt werden können, während in der zweiten Position vor allem Befestigungsflansche 12b mit kleineren Durchmessern geschützt werden. Durch die Drehbarkeit der Schutzvorrichtung 32 wird in der ersten Position der Schutzvorrichtung insbesondere der erste Radius r1 der Schutzvorrichtung 32 wirksam, während in der zweiten Position vorteilhafterweise der zweite Radius r2 der Schutzvorrichtung 32 wirksam wird. Die Drehbarkeit der Schutzvorrichtung 32 kommt auch bei Vergleich der oberen und unteren Hälfte der Figur 5 zum Ausdruck. Während die Schutzvorrichtung 32 in der oberen Bildhälfte insbesondere zum Schutz der Befestigungsflansche 12a des ersten Typs mit größeren Durchmessern verwendet wird (erste Position), kann die Schutzvorrichtung 32 beispielsweise um einen Winkel von 180 Grad gedreht werden und in dieser Position zum Schutz der Befestigungsflansche 12b des zweiten Typs mit kleineren Durchmessern verwendet werden (zweite Position).

Figur 5 zeigt eine bevorzugte Ausgestaltung der Schutzvorrichtung 32 im montierten Zustand an dem Trennschleifer 10. Insbesondere kann die Schutzvorrichtung 32 zwischen dem Schneidarm 38 und dem Blattschutz 36 angeordnet vorliegen. Die Drehbarkeit der Schutzvorrichtung 32 wird in Figur 5 durch den Pfeil angedeutet. Darüber hinaus wird in Figur 5 ein Befestigungsflansch 14 im montierten Zustand gezeigt.

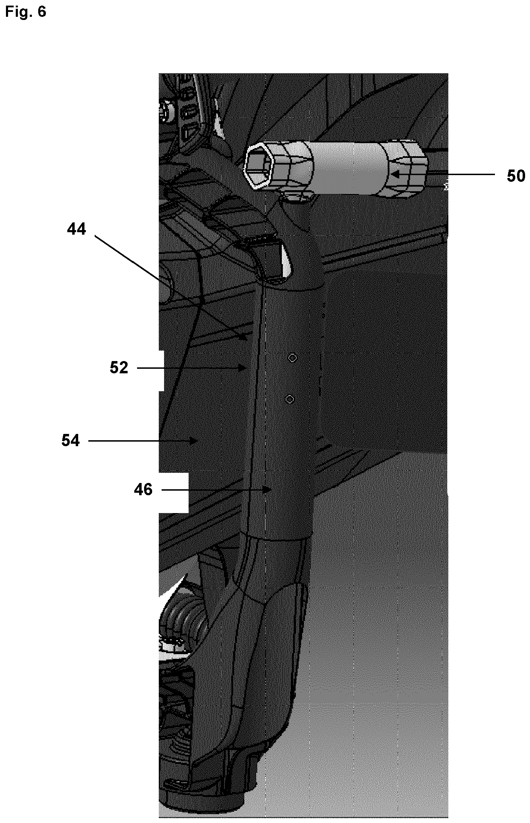

Figur 6 zeigt eine bevorzugte Ausgestaltung eines Handgriffs 44 mit Hohlraum 46 zur Aufnahme eines Werkzeugschlüssels 50. Der Werkzeugschlüssel 50 kann dazu verwendet werden, die Trennscheibe 12 an dem Trennschleifer 10 zu befestigen. Der Handgriff 44 kann einen Hohlraum 46 aufweisen, in den ein Griff des Werkzeugschlüssels 50 eingeführt werden kann. Der Hohlraum 46 kann insbesondere in einem Abschnitt 52 untergebracht vorliegen, der im Wesentlichen parallel zu einer Wand 54 des Gehäuses 34 des Trennschleifers 10 verläuft.

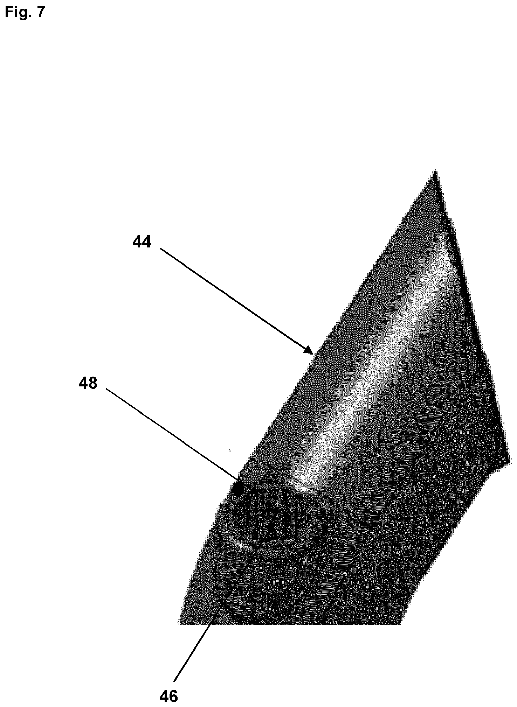

Figur 7 zeigt eine Detailansicht einer bevorzugten Ausgestaltung einer Öffnung eines Hohlraums 46 zur Aufnahme eines Werkzeugschlüssels 50, wobei in dem Hohlraum 46 Befestigungsrippen 48 angeordnet vorliegen. Die Befestigungsrippen 48 verbessern die Haltefunktion und sorgen für eine sichere Befestigung des Werkzeugschlüssels 50 in dem Hohlraum 46.

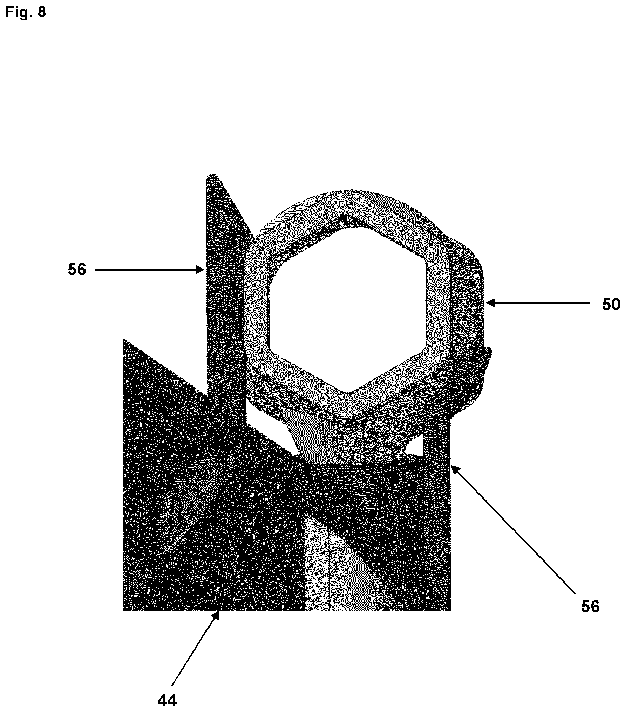

Figur 8 zeigt eine Detailansicht einer bevorzugten Ausgestaltung eines Klemm-Mittels 56 zur Befestigung des Werkzeugschlüssels 50 in dem Hohlraum 46 des Handgriffs 44 des Trennschleifers 10. Wenn der Griff des Werkzeugschlüssels 50 in dem Hohlraum 46 des Handgriffs 44 aufgenommen vorliegt, kann ein oberer Bereich des Werkzeugschlüssels 50 von den Klemm-Mitteln 56 umschlossen werden, um den Werkzeugschlüssel 50 mit einer definierten Ausrichtung bzw. Orientierung in dem Hohlraum 46 zu halten.

### Bezugszeichenliste

- 10: Trennschleifer
- 12: Trennscheibe
- 12a: Trennscheibe des ersten Typs, z.B. abrasive Trennscheibe
- 12b: Trennscheibe des zweiten Typs, z.B. Diamant-Trennscheibe
- 14: Befestigungsflansch
- 14a: Befestigungsflansch des ersten Typs, erste Gruppe von Befestigungsflanschen
- 14b: Befestigungsflansch des zweiten Typs, zweite Gruppe von Befestigungsflanschen
- 16: Befestigungsmittel
- 18: Zylinder, Pin
- 20: innerer Hohlraum
- 22: Gewindebohrung
- 24: Kontaktflächen
- 26: Kopfabschnitt der Befestigungsmittel
- 28: Spreizarme
- 30: distales Ende der Spreizarme
- 31: Verdickungen
- 32: Schutzvorrichtung
- 34: Gehäuse des Trennschleifers
- 36: Schutzhaube
- 38: Schneidarm
- 40: geschlossener Ring
- 42: halbringförmige Schutzvorrichtung
- 44: Handgriff
- 46: Hohlraum
- 48: Rippen
- 50: Werkzeugschlüssel
- 52: im Wesentlichen paralleler Abschnitt des Handgriffs
- 54: Gehäusewand
- 56: Klemm-Mittel
- 58: Öffnungen
- 60: Befestigungsflanschset
- 60a: Set mit Befestigungsflanschen des ersten Typs
- 60b: Set mit Befestigungsflanschen des zweiten Typs
- r1: Radius des Befestigungsflanschen des ersten Typs
- r2: Radius des Befestigungsflanschen des zweiten Typs

## Patentansprüche

1. Trennschleifer (10), der zum Einbringen eines Schnittes in einen Untergrund mit einer Trennscheibe (12) verbindbar ist, wobei die Trennscheibe (12) ausgewählt ist aus einer Gruppe von mindestens einem ersten Typ Trennscheibe (12a) und einem zweiten Typ Trennscheibe (12b), wobei die Trennscheiben des ersten Typs (12a) mit einer Gruppe von ersten Flanschen (14a) an dem Trennschleifer (10) befestigbar sind und wobei die Trennscheiben des zweiten Typs (12b) mit einer Gruppe von zweiten Flanschen (14b) an dem Trennschleifer (10) befestigbar sind,
**dadurch gekennzeichnet, dass**
der Trennschleifer (10) Mittel zur Befestigung (16) einer der beiden Gruppen von Flanschen (14a oder 14b) aufweist.

2. Trennschleifer (10) nach Anspruch 1
**dadurch gekennzeichnet, dass**
das Mittel zur Befestigung (16) der Flansche (14) einen Zylinder (18) aufweist, der einen inneren Hohlraum (20) mit Gewindebohrung (22) und auf seiner Außenfläche Kontaktflächen (24) zum Kontaktieren der Flansche (14) aufweist.

3. Trennschleifer (10) nach Anspruch 1
**dadurch gekennzeichnet, dass**
das Mittel zur Befestigung (16) der Flansche (14) als Schnapp-Verbindungsmittel ausgebildet ist.

4. Trennschleifer (10) nach Anspruch 3
**dadurch gekennzeichnet, dass**
das Schnapp-Verbindungsmittel (14) mit einem Kopfabschnitt (26) an dem Treffschleifer (10) befestigbar ist und auf der dem Kopfabschnitt (26) gegenüberliegenden Seite Spreizarme (28) mit einer distalen Verdickung (30) zur Aufnahme der Flansche (14) aufweist.

5. Trennschleifer (10) nach einem der vorhergehenden Ansprüche
**dadurch gekennzeichnet, dass**
das Mittel zur Befestigung (16) der Flansche (14) an einem beliebigen dafür geeigneten Ort an dem Trennschleifer (10) vorgesehen ist.

6. Trennschleifer (10) nach einem der vorhergehenden Ansprüche
**dadurch gekennzeichnet, dass**
die Befestigungsflansche des ersten Typs (14a) einen größeren Außendurchmesser als die Befestigungsflansche des zweiten Typs (14b) aufweisen.

7. Trennschleifer (10) nach einem der vorhergehenden Ansprüche
**dadurch gekennzeichnet, dass**
der Trennschleifer (10) eine Vorrichtung zum Schutz (32) der Flansche (14) aufweist.

8. Trennschleifer (10) nach Anspruch 7
**dadurch gekennzeichnet, dass**
die Vorrichtung zum Schutz (32) der Flansche (14) ringförmig ausgebildet ist und an einem Gehäuse (34) des Trennschleifers (10) drehbar befestigbar ist.

9. Trennschleifer (10) nach Anspruch 7 oder 8
**dadurch gekennzeichnet, dass**
die Vorrichtung zum Schutz (32) der Flansche (14) zwischen einer Schutzhaube (36) der Trennschleifers (10) und einem Schneidarm (38) des Trennschleifers (10) verliersicher anbringbar ist.

10. Trennschleifer (10) nach einem der Ansprüche 7 bis 9
**dadurch gekennzeichnet, dass**
die Vorrichtung zum Schutz (32) der Flansche (14) von einem geschlossenen Ring (40) oder von einem Winkelbereich eines Rings (42) gebildet wird.

11. Trennschleifer (10) nach einem der Ansprüche 8 bis 10
**dadurch gekennzeichnet, dass**
die Vorrichtung zum Schutz (32) der Flansche (14) zwei Öffnungen (42) aufweist, wobei die Öffnungen (58) auf gegenüberliegenden Seiten die Vorrichtung zum Schutz (32) der Flansche (14) angeordnet vorliegen und wobei die die Vorrichtung zum Schutz (32) der Flansche (14) mittels der Öffnungen (42) an der Schutzhaube (36) des Trennschleifers (10) befestigbar ist.

12. Kit (100) umfassend einen Trennschleifer (10') und einen Werkzeugschlüssel (50) **dadurch gekennzeichnet, dass**
der Trennschleifer (10) einen Handgriff (44) umfasst, wobei der Handgriff (44) einen Hohlraum (46) zur Aufnahme des Werkzeugschlüssels (50) aufweist.

13. Kit (100) nach Anspruch 12
**dadurch gekennzeichnet, dass**
der Hohlraum (46) an seiner Umfangswand Rippen (48) zur Fixierung des Werkzeugschlüssels (50) aufweist.

14. Kit (100) nach Anspruch 12 oder 13
**dadurch gekennzeichnet, dass**
der Handgriff (44) einen Abschnitt (52) aufweist, der im Wesentlichen parallel zu einer Gehäusewand (54) des Trennschleifers (10') verläuft, wobei sich der Hohlraum (46) zumindest teilweise in einem Innenraum dieses im Wesentlichen parallel verlaufenden Abschnitts (52) erstreckt.

15. Kit (100) nach einem der Ansprüche 12 bis 14
**dadurch gekennzeichnet, dass**
der Handgriff (44) Klemm-Mittel (56) zur weiteren Fixierung des Werkzeugschlüssels (50) aufweist.
